# EUROPÄISCHE PATENTSCHRIFT

(11) **EP 1 068 455 B1**
(45) Veröffentlichungstag und Bekanntmachung des Hinweises auf die Patenterteilung: **03.05.2006**
(21) Anmeldenummer: 00906169.8
(22) Anmeldetag: 01.02.2000
(51) Int. Cl.: F04D 13/06

(54) **KÜHLWASSERPUMPE**
COOLING WATER PUMP
POMPE A EAU DE REFROIDISSEMENT

(30) Priorität: 02.02.1999 DE 19903817
(43) Veröffentlichungstag der Anmeldung: 17.01.2001
(73) Patentinhaber: ROBERT BOSCH GMBH, 70442 Stuttgart (DE)
(72) Erfinder: KOCH, Stefan, D-77855 Achern (DE); KOTTHAUS, Stefan, D-76547 Sinzheim (DE); WOLF, Joerg, D-76139 Karlsruhe (DE)
(74) Vertreter: Grosse, Rainer
(86) Internationale Anmeldenummer: PCT/DE2000/000261
(87) Internationale Veröffentlichungsnummer: WO 2000/046507

(56) Entgegenhaltungen:
- EP-A- 0 481 423
- WO-A-93/00513
- CH-A- 414 354
- DE-A- 19 624 145
- US-A- 4 204 810
- PATENT ABSTRACTS OF JAPAN vol. 009, no. 223 (M-411), 10. September 1985 (1985-09-10) & JP 60 081489 A (HONDA GIKEN KOGYO KK), 9. Mai 1985 (1985-05-09)

## Beschreibung

Die Erfindung betrifft eine Pumpe, insbesondere für Kühlwasser eines Kraftfahrzeugs. Im Automobilbereich wird die Abwärme des Verbrennungsmotors zum Beispiel durch Verbesserung des Wirkungsgrads verringert. Die Verbrennungswärme wird sowohl über den Wärmetauscher für den Innenraum als auch über den Kühlergrill geleitet, so daß es beim Kaltstart im Winter in der Fahrgastzelle nur relativ langsam warm wird. Um den Komfort zu erhöhen, werden zunehmend elektrisch betriebene Zusatzwasserpumpen eingesetzt, um gezielter den Innenraum aufheizen zu können.

Eine derartige Pumpe mit einem in einer Pumpkammer drehbar gelagerten Flügelrad, einer Erregeranordnung zum Drehantreiben des Flügelrads und einer Steuerschaltung für die Erregeranordnung ist aus DE 44 11 960 A1 bekannt. Bei dieser bekannten Pumpe sind die Erregeranordnung und die Steuerschaltung in einer gemeinsamen, im wesentlichen zylinderförmigen Kammer untergebracht, die gegen die Pumpkammer hermetisch dicht ist und in diese eingreift.

Das Flügelrad ist fest mit einem ringförmigen Rotor verbunden, der sich in einem ringförmigen Teil der Pumpkammer um die Erregeranordnung herum erstreckt. Bei dieser Konstruktion kann Abwärme von der Erregeranordnung in die Pumpflüssigkeit nur durch die Wand der Pumpkammer und das die Pumpkammer in axialer Richtung überdeckende Flügelrad abfließen. Wärmefluß in radialer Richtung ist nur durch zwei Wände und den Rotor hindurch möglich. Die auf einer Leiterplatte montierte Steuerschaltung ist der Abwärme jedoch direkt ausgesetzt. Die maximale Einsatztemperatur dieser Pumpe ist somit durch die beschränkte Temperaturbeständigkeit des Materials der Leiterplatte und/oder die Erweichungstemperatur des Lots festgelegt, das zur Montage der Komponenten der Steuerschaltung auf der Leiterplatte dient.

Bei der Montage der Pumpe ist es erforderlich, die Erregeranordnung und die Leiterplatte mit der Steuerschaltung durch eine rückwärtige Öffnung in die entsprechende Kammer einzuschieben und dann die Öffnung mit einem Deckel zu verschließen, an dem ein Stecker für die Versorgungskontakte der Steuerschaltung angeformt ist. Ein elektrischer Kontakt zwischen dem Stecker und der Steuerschaltung kommt daher mit Hilfe von Stiften zustande, die auf der Leiterplatte montiert sind und bei der Anbringung des Deckels in eine am Deckel angebrachte Buchse eingeschoben werden. Die Anbringung der Buchsen an den Stiften erfolgt blind, es ist deshalb schwer möglich, schlechte Kontakte, bei denen Stift und Buchse nicht wie gewünscht ineinandergreifen, zu erkennen und zu korrigieren. Die Qualität eines solchen Einsteckkontakts kann nachlassen, wenn er starken Temperaturwechseln oder hohen Temperaturen ausgesetzt ist.

Es wird damit gerechnet, dass demnächst in der Kraftfahrzeugtechnik Bedarf nach Kühlwasserpumpen bestehen wird, die in der Lage sind, Dauereinsatztemperaturen von 130 bis 140°C auszuhalten. Dies ergibt sich nicht nur dadurch, dass höhere Kühlwasserdrücke und -siedetemperaturen vorgesehen werden, sondern auch deshalb, weil bei fortschreitender Miniaturisierung der in Kraftfahrzeugen eingebauten Hilfsaggregate, zu denen auch eine Kühlwasserpumpe gehört, die Leistungsdichte dieser Aggregate wächst, und somit die Betriebstemperatur der Aggregate aufgrund von Eigenerwärmung zunimmt.

Für solche Betriebsbedingungen geeignete Leiterplatten und Lote sind jedoch kostspielig.

Aus der WO-A-93 00 513 ist bereits eine Pumpe für eine Flüssigkeit gemäß dem Oberbegriff des Anspruchs 1 bekannt. Der in der Pumpkammer drehbar gelagerte Rotor ist dort der Anker eines kollektorlosen Motors, der in die Flüssigkeit in der Pumpkammer eingetaucht von der Erregeranordnung angetrieben wird. Der Anker ist drehfest mit einem separaten Pumpenrotor einer an einem Stirnende der Pumpkammer angeordneten schlitzgesteuerten Radialkolbenpumpe verbunden, die saugseitig über eine Öffnung mit der Pumpkammer kommuniziert und durch einen Einlassanschluss in die Pumpkammer zugeführte Flüssigkeit aus der Öffnung in einen druckseitigen Auslassanschluss fördert. Durch die Aufeinanderfolge von Rotor und Pumpenrotor in axialer Richtung der Pumpe weist diese jedoch eine verhältnismäßig große Baulänge auf. Außerdem kann die von der Erregeranordnung erzeugte Wärme nur durch Wärmeleitung an die vom Einlassanschluss durch einen kleinen Teil der Pumpkammer in die Öffnung strömende Flüssigkeit abgeführt werden.

Weiter beschreibt die DE 196 24 145 A1 einen Elektromotor für eine Kreiselpumpe, insbesondere einen Spalttopfmotor, bei dem das Innere eines zwischen dem Rotor und dem Stator angeordneten Spalttopfs und ein den Stator umgebender Außenmantel zur Kühlung des Motors von der von der Kreiselpumpe gepumpten Flüssigkeit durchströmt wird. In der Nähe einer Innenseite eines metallischen Gehäusedeckels ist eine elektronische Bauteile tragende Platte in einem axialen Abstand vom Stirnende des Stators angeordnet und von diesem weder durch die Flüssigkeit im Spalttopf noch durch die Flüssigkeit im Außenmantel thermisch getrennt.

### Vorteile der Erfindung

Gemäß der Erfindung wird eine Pumpenkonstruktion mit den eingangs genannten Merkmalen vorgeschlagen, bei der die Steuerschaltung und die Erregeranordnung durch die Pumpkammer thermisch voneinander getrennt sind und der Rotor ein die Flüssigkeit pumpendes Flügelrad ist, das zumindest im Bereich eines von der Erregeranordnung erzeugbaren Magnetfeldes aus einem magnetischen Material besteht. Bei einer solchen Anordnung wird die Abwärme der Erregeranordnung im wesentlichen von der durch die Pumpkammer strömenden Flüssigkeit aufgenommen und abgeführt, so dass sie die Steuerschaltung nicht erreichen kann und auf diese Weise eine Überhitzung der Steuerschaltung über die Temperatur der Flüssigkeit hinaus vermieden wird. Außerdem übernimmt das Flügelrad selbst die Funktion eines Rotors, der direkt mit dem Erregerfeld wechselwirkt, was eine leichtere und kompaktere Konstruktion der Pumpe ermöglicht.

Durch eine ringförmige Anbringung der Erregeranordnung um die Pumpkammer herum wird außerdem erreicht, dass die Abwärme der Erregeranordnung auch effektiv an die Umgebung der Pumpe, im Fall einer Kraftfahrzeugkühlwasserpumpe also den Motorraum, abgegeben werden kann. Diese Erregeranordnung kann zweckmäßigerweise als Klauenpol-Anordnung ausgebildet sein.

Die Steuerschaltung ist vorzugsweise an einer Stirnwand der Pumpkammer angeordnet. Dies ermöglicht eine gute thermische Abschirmung der Steuerschaltung von der Erregeranordnung bei gleichzeitig kompaktem Aufbau, und es erlaubt ferner, einen gegebenenfalls zur Erfassung der Stellung des Flügelrads benötigten Magnetfeldsensor, der, um wirksam zu sein, in geringer Entfernung vom Flügelrad angeordnet sein muß, mit dem Rest der Steuerschaltung zu einer Einheit, vorzugsweise einer integrierten Schaltung, zusammenzufassen.

Die Pumpe umfaßt zweckmäßigerweise ein erstes Gehäuseteil, zum Beispiel aus einem temperaturbeständigen Kunststoff, das eine beispielsweise zylindrische Seitenwand und eine erste Stirnwand der Pumpe bildet , wobei zwischen der Seitenwand der Pumpkammer und einer Außenwand des ersten Gehäuseteils ein ringförmiger Hohlraum gebildet ist, der die Erregeranordnung aufnimmt. Dieses Gehäuseteil ist, wie später genauer erläutert wird, für eine einfache Montage der Pumpe wichtig.

Ein zweites Gehäuseteil verschließt zweckmäßigerweise den ringförmigen Hohlraum und definiert eine Kammer für die Steuerschaltung.

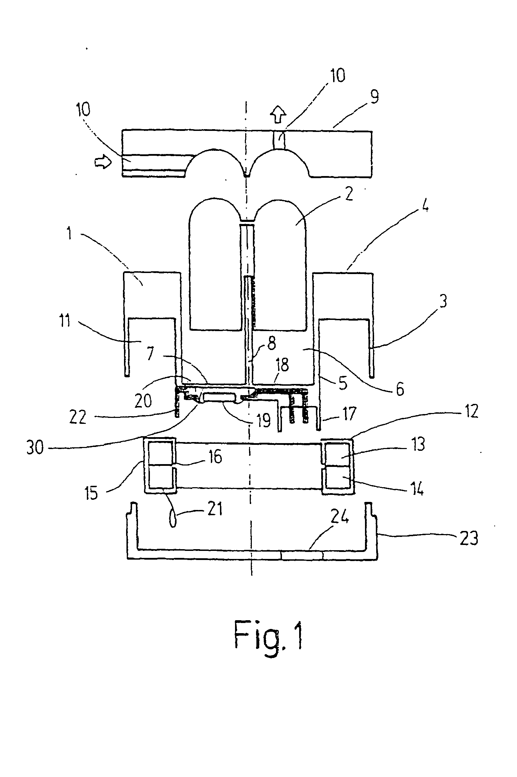

Gemäß einem bevorzugten Ausführungsbeispiel (Figur 1) ist die Steuerschaltung in thermischem Kontakt mit der Stirnwand montiert, so daß ihre Temperatur durch die Temperatur der gepumpten Flüssigkeit zuverlässig begrenzbar ist. In diesem Fall ist ein Stecker für die elektrische Versorgung der Steuerschaltung zweckmäßigerweise an die Stirnwand angeformt. Elektrische Leiter von und zur Steuerschaltung sind in der Stirnwand eingearbeitet. Dieses kann dadurch erfolgen, daß die Stirnwand beziehungsweise das erste Gehäuseteil, von dem sie ein Teil ist, als MID (Moulded Interconnection Device) , das heißt, als ein Spritzgußteil mit metallisierten Zonen, ausgeführt ist, oder daß Leiter in Form von Stanzgittern in der Stirnwand eingefügt sind.

Die Ausführung der Steuerschaltung als integrierte Schaltung mit an die elektrischen Leiter gebondeten Anschlüssen erlaubt es, auf die Verwendung von Lot an und in der Steuerschaltung völlig zu verzichten.

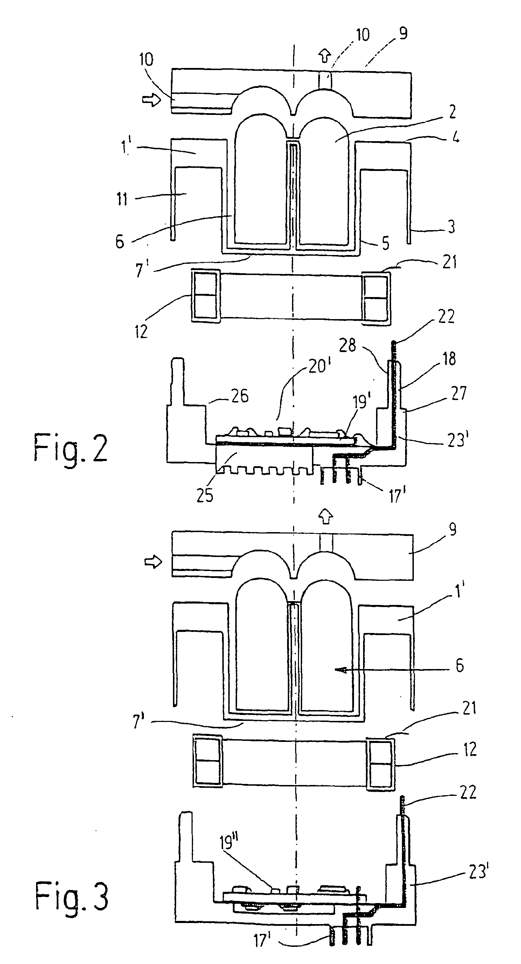

Weitere bevorzugte Ausführungsbeispiele (Figuren 2 und 3) sehen vor, daß die Steuerschaltung in thermischem Kontakt mit dem zweiten Gehäuseteil montiert ist. In diesem Fall können Stecker und elektrische Leiter am zweiten Gehäuseteil in ähnlicher Weise angeformt oder eingearbeitet sein wie oben in Verbindung mit der Stirnwand erwähnt.

Die notwendigen elektrischen Verbindungen zwischen einigen der erwähnten Leiter und der Erregeranordnung sind vorzugsweise formschlüssig, insbesondere durch Widerstands- oder Ultraschallschweißen oder durch Hot Staking hergestellt.

Nicht zuletzt zum Schutz vor Berührung und Verschmutzung ist die Steuerschaltung vorzugsweise in ein wärmeleitzähiges Gel oder Harz eingebettet.

Weitere Merkmale und Vorteile der Erfindung ergeben sich aus der nachfolgenden Beschreibung von Ausführungsbeispielen.
- Figuren 1 bis 3: zeigen schematisch im Schnitt-Ausführungsbeispiele von erfindungsgemäßen Pumpen.

### Beschreibung der Ausführungsbeispiele

Figur 1 zeigt schematisch im Schnitt und in einer auseinandergezogenen Darstellung ein erstes Ausführungsbeispiel der Erfindung. Ein erstes Gehäuseteil 1 umfaßt eine zylindrische Außenwand 3, die durch einen Flansch 4 an ihrem in der Figur oben liegenden Ende mit einer konzentrischen Wand verbunden ist, die eine Seitenwand 5 einer Pumpkammer 6 bildet. Eine erste Stirnwand 7 schließt die Pumpkammer in der Figur nach unten ab. Ein sich in Axialrichtung vom Boden 7 aus erstreckender Dorn 8 trägt ein Flügelrad 2, das innerhalb der Pumpkammer 6 frei drehbar ist. Ein Deckel 9 ist zur Befestigung am Flansch 4 vorgesehen und bildet eine gegenüberliegende zweite Stirnwand der Pumpkammer 6. Zulauf-und Ablauföffnungen 10 für die zu pumpende Flüssigkeit verlaufen durch den Deckel 9.

Außenwand 3, Flansch 4 und Seitenwand 5 begrenzen einen ringförmigen Kanal oder Hohlraum 11, in dem eine Erregeranordnung 12 untergebracht wird. Diese Erregeranordnung umfaßt zwei mir Strömen in entgegengesetzten Richtungen beaufschlagbare, in axialer Richtung gestaffelte Wicklungen 13, 14, eingeschlossen in ein metallisches Gehäuse 15, das sich, abgesehen von einem Luftspalt 16, im Querschnitt rings um die Wicklungen 13;14 erstreckt. Die Position des Luftspalts in axialer Richtung variiert entlang des Umfangs der Gehäuses 15 und bewirkt, daß je nach Lage des Luftspalts 16 das Magnetfeld jeweils einer der zwei Wicklungen 13,14 stärker als das andere in die Pumpkammer 6 durchgreift. Das Flügelrad 2 besteht wenigstens in den Bereichen, in denen es von dem durchgreifenden Magnetfeld erfaßt wird, vorzugsweise der einfacheren Herstellung halber aber vollständig aus einem magnetischen Material, vorzugsweise einem Kunststoff mit eingebetteten magnetischen Partikeln. Diese wechselwirken mit dem in die Pumpkammer 6 durchgreifenden magnetischen Feld und versetzen bei geeigneter Beschaltung der Wicklungen 13,14 das Flügelrad 2 in Drehung. Ein solches Antriebsprinzip ist als Klauenpol-Motor bekannt.

An der Stirnwand 7 der Pumpkammer 5 ist ein elektrischer Steckverbinder 17 einteilig angeformt. Die Gestalt dieses Steckverbinders kann anwendungs- beziehungsweise kundenspezifisch variiert werden. Kontaktstifte des Steckverbinders 17 sind über in die Stirnwand 7 eingebettete Leiter 18 mit einer Steuerschaltung 19 verbunden, die in einer anwenderspezifischen integrierten Schaltung alle zur Ansteuerung der Regelungen 13,14 und gegebenenfalls zur Erfassung der Position des Flügelrads erforderlichen Funktionsbestandteile umfaßt. Die Steuerschaltung 19 ist auf einer nichtmagnetischen Metallplatte 30 befestigt, zum Beispiel verklebt und zusammen mit dieser in eine Aussparung 20 der Stirnwand 7 eingelassen. Die Pumpkammer 6 hat im Bereich der Aussparung 20 nur eine geringe Wandstärke, die im wesentlichen nur der einfachen Abdichtung der Aussparung 20 gegen die Pumpkammer dient. Die Metallplatte 30 liefert die erforderliche Festigkeit der Stirnwand 7 und dient der gleichmäßigen Verteilung und effizienten Abfuhr der Abwärme der Steuerschaltung 19. Ihre Betriebstemperatur wird daher durch die Temperatur der Flüssigkeit wirksam begrenzt.

Selbst wenn sich die Wicklungen 13,14 im Betrieb über die Temperatur der Flüssigkeit hinaus erhitzen, kann ihre Abwärme die Steuerschaltung 19 im wesentlichen allenfalls durch Wärmefluß über die Seitenwand 5 erreichen. Da diese Seitenwand 5 aber ebenfalls durch die Flüssigkeit gekühlt wird, ist die Steuerschaltung 19 durch die Pumpkammer 6 wirksam vor der Abwärme der Wicklungen geschützt.

Die Steuerschaltung 19 ist mit den Leitern 18 in herkömmlicher Weise über dünne Bonddrähte verbunden. Da diese Verbindung Lotfrei ist, sind Betriebstemperaturen der Steuerschaltung von über 100°C und bis zu 140°C ohne weiteres zulässig, ohne die Zuverlässigkeit der Steuerschaltung 19 zu gefährden.

Die oben beschriebene Pumpe läßt sich ausgehend vom ersten Gehäuseteil 1 mit darin vormontierten Leiterbahnstrukturen 18 und fertig gebondeter Steuerschaltung 19 in wenigen einfachen Schritten zusammensetzen. Dazu wird zunächst die Erregeranordnung 12 in den Hohlraum 11 eingeschoben, wobei darauf geachtet wird, daß Anschlußschlaufen 21 der Erregeranordnung (von denen in der Figur der Einfachheit halber nur eine gezeigt ist) korrekt um hierfür vorgesehene Anschlußlaschen wie etwa 22 gelegt werden. Anschließend wird die Lasche 22 in einem unter der Bezeichnung Hot Staking bekannten Verfahren umgebogen und warmverpreßt, wodurch die Schlaufe 21 sicher gefangen wird. Alternativ kommen auch Verbindungstechniken wie etwa Widerstands- oder Ultraschallschweißen in Frage.

Anschließend braucht nur noch ein zweites Gehäuseteil 23 aufgesteckt und mit der Außenwand 3 verbunden zu werden. Dieses zweite Gehäuseteil hat ein Loch 24, durch das der Steckverbinder 17 hindurchgreift. Um ein Vordringen von Schmutz und korrosiven Substanzen durch das Loch 24 zur Steuerschaltung 19 zu verhindern, und um Wärmeübertragung über Luft von der Erregeranordnung 12 zur Steuerschaltung 19 zu verhindern, sind die zwei Gehäuseteile 1,23 zweckmäßigerweise so bemessen, daß das zweite Gehäuseteil 23 dicht an der Stirnwand 7 zu liegen kommt, so daß die Aussparung 20 zu einer im wesentlichen geschlossenen Kammer wird. Auf jeden Fall ist allerdings vorgesehen, daß die Steuerschaltung in der Aussparung 20 mit einem wärmeleitenden Gel oder Harz eingegossen wird, das selbst dann, wenn Verunreinigungen durch das Loch 24 eingedrungen sind, diese daran hindert, die Steuerschaltung 19 und ihre Bonddrähte zu erreichen. Die Steuerschaltung ist somit - trotz des Lochs 24 - hermetisch eingeschlossen und geschützt.

Anschließend oder vorab wird das Flügelrad 2 in die Pumpkammer 6 eingesetzt und der Deckel 9 am Flansch 4 dicht befestigt, um die Pumpkammer zu verschließen.

Man erhält so einen Pumpenaufbau, der äußerst kompakt ist, gleichzeitig aber bequem und - da keine Blindfügeschritte erforderlich sind - kontrollierbar zusammengefügt werden kann.

Figur 2 zeigt eine zweite Ausgestaltung einer erfindungsgemäßen Pumpe. Der Deckel 9 und das Flügelrad 2 unterscheiden sich nicht von denen des ersten Ausführungsbeispiels und werden nicht erneut beschrieben. Das erste Gehäuseteil 1' unterscheidet sich von dem aus Figur 1 lediglich darin, daß seine Stirnwand 7' glatt ist und nicht zur Montage einer Steuerschaltung daran vorgesehen ist. Die Erregeranordnung 12 unterscheidet sich von der aus Figur 1 lediglich durch ihre Orientierung; ihre Anschlußschlaufen 21 befinden sich an der (in der Figur) oberen Seite der Erregeranordnung 12.

Eine Steuerschaltung 19' ist bei dieser Ausgestaltung am zweiten Gehäuseteil 23' montiert und so thermisch mit der Ümgebung der Pumpe verbunden. Da nun der zur Verfügung stehende Einbauraum größer geworden ist, ist bei dieser Ausgestaltung eine Ausführung der Steuerschaltung 19' in Form eines Dickschichthybrids mit diskreten Komponenten möglich. Ein mit dem Hybrid verbundener Kühlkörper 25 ist in das zweite Gehäuseteil 23' eingelassen. Der Abstand der Steuerschaltung 19' von der Stirnwand 7' beträgt nach Montage nur wenige Millimeter, so daß ein zur Erfassung der Position des Rotors beziehungsweise Flügelrads 2 benötigter Sensor, zum Beispiel ein Hall-Sensor oder ein magnetoresistives Element, der einen geringen Abstand von dem zu erfassenden Gegenstand haben muß, in die Steuerschaltung einbezogen sein kann.

Das zweite Gehäuseteil 23' trägt ferner einen einstückig angeformten Steckverbinder 17', und von den Steckkontakten des Steckverbinders 17' ausgehende Leiter 18 verlaufen innerhalb der Wand des zweiten Gehäuseteils 23'.

Das zweite Gehäuseteil 23' hat hier die Form eines flachen Bechers mit einer zylindrischen Außenwand 27. Diese Außenwand bildet an ihrer Innenseite eine Schulter beziehungsweise einen Vorsprung 26, dessen Funktion zum einen ist, die Erregeranordnung 12 zu tragen, und zum anderen, den Hohlraum 11, in dem die Erregeranordnung 12 bei fertig montierter Pumpe untergebracht ist, gegen eine Kammer 20' abzugrenzen, die sich zwischen der Stirnwand 7' des ersten Gehäuseteils 1' und dem Boden des zweiten Gehäuseteils 23' erstreckt und in der die Steuerschaltung 19' untergebracht ist. Der Vorsprung 26 behindert so den Luftaustausch zwischen dem Hohlraum 11 und der die Steuerschaltung 19' enthaltenden Kammer 20' und beugt so deren Überhitzung vor.

Die Außenwand 27 des zweiten Gehäuseteils 23' hat einen oberen Abschnitt 28, der geringfügig verjüngt ist, um in den Hohlraum 11 des ersten Gehäuseteils einzugreifen. Einige der innerhalb des zweiten Gehäuseteils 23 verlaufenden Leiter 18 erstrecken sich bis zur Oberkante des oberen Abschnitts 28, wo sie in Laschen 22 enden. Diese Laschen sind wie im Fall von Figur 1 vorgesehen, um elektrische Verbindungen für die Stromversorgung der Erregeranordnung 12 zu bilden.

Diese Ausgestaltung zeichnet sich durch eine besonders einfache Montage aus. Hier werden nämlich alle in der Figur getrennt dargestellten Bauteile, zweites Gehäuseteil 23', Erregeranordnung 12, Gehäuseoberteil 1', Flügelrad 2 und Deckel 9 einfach nur der Reihe nach aufeinandergestapelt und aneinander befestigt, ohne daß dafür die Orientierung der entstehenden Pumpe verändert werden muß. Eine solche Konstruktion ist offensichtlich besonders geeignet für eine kostensparende, automatische Fertigung.

Figur 4 zeigt eine Abwandlung der Ausgestaltung aus Figur 3, bei der die Steuerschaltung 19'' eine mit diskreten Komponenten zweiseitig bestückte Leiterplatte ist. Falls eine solche Bestückung aus Platzgründen nötig ist, ist es zweckmäßig, die zwischen der Stirnwand 7' des ersten Gehäuseteils 1' und dem zweiten Gehäuseteil 23' definierte Kammer 20', die die Steuerschaltung 19" aufnimmt, mit einem wärmeleitenden Gel oder Harz zu verfüllen, das einen guten Wärmekontakt mit der Pumpkammer und/oder der Umgebung sicherstelle und die Steuerschaltung vor Überhitzung durch die Erregeranordnung 12' schützt.

Da das Harz oder Gel wie beim ersten Ausführungsbeispiel eine hermetische Umhüllung der Steuerschaltung 19' beziehungsweise 19'' bildet, ist es nicht unbedingt notwendig, die Verbindung zwischen erstem und zweitem Gehäuseteil am oberen Abschnitt 28 der Außenwand 27 auf ihrer gesamten Länge abzudichten, was die Fertigung weiter vereinfacht.

## Patentansprüche

1. Pumpe für eine Flüssigkeit, insbesondere für Kühlwasser, mit einem in einer Pumpkammer (6) drehbar gelagerten Rotor (2), einer Erregeranordnung (12) zum drehenden Antreiben des Rotors (2) und einer Steuerschaltung (19, 19', 19'') für die Erregeranordnung (12), wobei die Steuerschaltung (19, 19', 19") und die Erregeranordnung (12) durch die Pumpkammer (6) thermisch voneinander getrennt sind, **dadurch gekennzeichnet, dass** der Rotor ein die Flüssigkeit pumpendes Flügelrad (2) ist, das zumindest im Bereich eines von der Erregeranordnung (12) erzeugbaren Magnetfeldes aus einem magnetischen Material besteht.

2. Pumpe nach Anspruch 1, **dadurch gekennzeichnet, dass** sich die Erregeranordnung (12) ringförmig um die Pumpkammer (6) erstreckt.

3. Pumpe nach einem der vorhergehenden Ansprüche, **dadurch gekennzeichnet, dass** die Steuerschaltung (19, 19' , 29' ') an einer Stirnwand (7, 7') der Pumpkammer (6) angeordnet ist.

4. Pumpe nach einem der vorhergehenden Ansprüche, **dadurch gekennzeichnet, dass** sie ein erstes Gehäuseteil (23,23') umfasst, das eine Seitenwand (5) und eine erste Stirnwand (7,7') der Pumpkammer (6) bildet, wobei zwischen der Seitenwand (5) der Pumpkammer und einer Außenwand (3) des ersten Gehäuseteils (1,1') ein ringförmiger Hohlraum (11) gebildet ist, der die Erregeranordnung (12) aufnimmt.

5. Pumpe nach Anspruch 4, **dadurch gekennzeichnet, dass** sie ein zweites Gehäuseteil (23,23') umfasst, das den ringförmigen Hohlraum (11) verschließt und eine Kammer (20,20') für die Steuerschaltung (19,19',19") definiert.

6. Pumpe nach einem der Ansprüche 3 bis 5, **dadurch gekennzeichnet, dass** die Steuerschaltung (19) in thermischem Kontakt mit der Stirnwand (7) montiert ist.

7. Pumpe nach Anspruch 6, **dadurch gekennzeichnet, dass** ein Stecker (17) für die elektrische Versorgung der Steuerschaltung (19) und/oder der Erregeranordnung (12) an die Stirnwand (7) angeformt ist.

8. Pumpe nach Anspruch 6 oder 7, **dadurch gekennzeichnet, dass** elektrische Leiter (18) von und zur Steuerschaltung (19) in die Stirnwand (7) eingearbeitet sind.

9. Pumpe nach Anspruch 8, **dadurch gekennzeichnet, dass** die Steuerschaltung (19) eine integrierte Schaltung ist und an die elektrischen Leiter (18) gebondet ist.

10. Pumpe nach Anspruch 4, **dadurch gekennzeichnet, dass** die Steuerschaltung (19',19") in thermischem Kontakt mit dem zweiten Gehäuseteil (23') montiert ist.

11. Pumpe nach Anspruch 10, **dadurch gekennzeichnet, dass** ein Steckverbinder (17) für die elektrische Versorgung der Steuerschaltung (19',19'') und/oder der Erregeranordnung (12) an das zweite Gehäuseteil (23') angeformt ist.

12. Pumpe nach Anspruch 10 oder 11, **dadurch gekennzeichnet, dass** elektrische Leiter (18) von und zur Steuerschaltung (19',19'') in das zweite Gehäuseteil (23') eingearbeitet sind.

13. Pumpe nach Anspruch 8 oder 12, **dadurch gekennzeichnet, dass** Anschlüsse (21) der Erregeranordnung mit bestimmten der Leiter (18) formschlüssig verbunden sind.

14. Pumpe nach Anspruch 13, **dadurch gekennzeichnet, dass** die formschlüssigen Verbindungen durch Widerstands- oder Ultraschallschweißen oder durch Hot Staking hergestellt sind.

15. Pumpe nach einem der vorhergehenden Ansprüche, **dadurch gekennzeichnet, dass** die Steuerschaltung (19,19',19'') in ein wärmeleitfähiges Gel oder Harz eingebettet ist.

## Revendications

1. Pompe pour un liquide, en particulier pour eau de refroidissement, comprenant un rotor (2) en rotation dans une chambre de pompe (6), un dispositif d'excitation (12) pour entraîner le rotor (2), et un circuit de commande (19, 19', 19") pour le dispositif d'excitation (12), dans laquelle le circuit de commande (19, 19', 19") et le dispositif d'excitation (12) sont thermiquement séparés l'un de l'autre par la chambre de pompe (6),
**caractérisée en ce que**
le rotor est une roue à palettes (2) qui pompe le liquide et réalisée à partir d'un matériau magnétique, du moins dans la zone d'un champ magnétique pouvant être généré par le dispositif d'excitation (12).

2. Pompe selon la revendication 1,
**caractérisée en ce que**
le dispositif d'excitation (12) s'étend en forme d'anneau autour de la chambre de pompe (6).

3. Pompe selon l'une quelconque des revendications précédentes,
**caractérisée en ce que**
le circuit de commande (19, 19', 19") est disposé dans une paroi frontale (7, 7') de la chambre de pompe (6).

4. Pompe selon l'une quelconque des revendications précédentes,
**caractérisée en ce qu'**
elle comprend un premier élément de boîtier (23, 23') qui forme une paroi latérale (5) et une première paroi frontale (7, 7') de la chambre de pompe (6), avec un espace creux annulaire (11) formé entre la paroi latérale (5) de la chambre de pompe et une paroi extérieure (3) du premier élément de boîtier (1, 1') et recevant le dispositif d'excitation (12).

5. Pompe selon la revendication 4,
**caractérisée en ce qu'**
elle comprend un deuxième élément de boîtier (23, 23') qui ferme l'espace creux annulaire (11) et définit une chambre (20, 20') pour le circuit de commande (19, 19', 19").

6. Pompe selon l'une quelconque des revendications 3 à 5,
**caractérisée en ce que**
le circuit de commande (19) est monté en contact thermique avec la paroi frontale (7).

7. Pompe selon la revendication 6,
**caractérisée en ce qu'**
un connecteur (17) est rapporté par moulage à la paroi frontale (7) pour l'alimentation électrique du circuit de commande (19) et/ou du dispositif d'excitation (12).

8. Pompe selon la revendication 6 ou 7,
**caractérisée en ce que**
des conducteurs électriques (18) depuis et vers le circuit de commande (19) sont aménagés dans la paroi frontale (7).

9. Pompe selon la revendication 8,
**caractérisée en ce que**
le circuit de commande (19) est un circuit intégré et relié par métallisation aux conducteurs électriques (18).

10. Pompe selon la revendication 4,
**caractérisée en ce que**
le circuit de commande (19', 19") est monté en contact thermique avec le deuxième élément de boîtier (23').

11. Pompe selon la revendication 10,
**caractérisée en ce qu'**
un connecteur (17) est rapporté par moulage au deuxième élément de boîtier (23') pour l'alimentation électrique du circuit de commande (19, 19") et/ou du dispositif d'excitation (12).

12. Pompe selon la revendication 10 ou 11,
**caractérisée en ce que**
des conducteurs électriques (18) depuis et vers le circuit de commande (19', 19") sont aménagés dans le deuxième élément de boîtier (23').

13. Pompe selon la revendication 8 ou 12,
**caractérisée en ce que**
des raccords (21) du dispositif d'excitation sont reliés par complémentarité de formes à certains des conducteurs (18).

14. Pompe selon la revendication 13,
**caractérisée en ce que**
les jonctions par complémentarité de formes sont réalisées par soudage par résistance, par ultrasons ou par empilage à chaud.

15. Pompe selon l'une quelconque des revendications précédentes,
**caractérisée en ce que**
le circuit de commande (19, 19', 19") est encapsulé dans un gel thermo-conducteur ou une résine thermoconductrice.

## Claims

1. Pump for a liquid, in particular cooling water, with a rotor (2) mounted rotatably in a pumping chamber (6), with an exciting arrangement (12) for the rotating drive of a rotor (2), and a control circuit (19, 19', 19") for the exciting arrangement (12), the control circuit (19, 19', 19") and the exciting arrangement (12) being thermally separated from one another by the pumping chamber (6), **characterized in that** the rotor is a vane wheel (2) which pumps the liquid and which consists of magnetic material at least in the region of a magnetic field capable of being generated by the exciting arrangement (12).

2. Pump according to Claim 1, **characterized in that** the exciting arrangement (12) extends annularly around the pumping chamber (6).

3. Pump according to one of the preceding claims, **characterized in that** the control circuit (19, 19', 19") is arranged on an end wall (7, 7') of the pumping chamber (6).

4. Pump according to one of the preceding claims, **characterized in that** it comprises a first housing part (23, 23') which forms a side wall (5) and a first end wall (7, 7') of the pumping chamber (6), an annular cavity (11), which receives the exciting arrangement (12), being formed between the side wall (5) of the pumping chamber and an outer wall (3) of the first housing part (1, 1').

5. Pump according to Claim 4, **characterized in that** it comprises a second housing part (23, 23') which closes the annular cavity (11) and which defines a chamber (20, 20') for the control circuit (19, 19', 19'').

6. Pump according to one of Claims 3 to 5, **characterized in that** the control circuit (19) is mounted in thermal contact with the end wall (7).

7. Pump according to Claim 6, **characterized in that** a plug (17) for the electrical supply of the control circuit (19) and/or the exciting arrangement (12) is integrally formed onto the end wall (7).

8. Pump according to Claim 6 or 7, **characterized in that** electrical conductors (18) from and to the control circuit (19) are incorporated into the end wall (7).

9. Pump according to Claim 8, **characterized in that** the control circuit (19) is an integrated circuit and is bonded to the electrical conductors (18).

10. Pump according to Claim 4, **characterized in that** the control circuit (19', 19") is mounted in thermal contact with the second housing part (23').

11. Pump according to Claim 10, **characterized in that** the plug connector (17) for the electrical supply of the control circuit (19', 19'') and/or of the exciting arrangement (12) is integrally formed onto the second housing part (23').

12. Pump according to Claim 10 or 11, **characterized in that** electrical conductors (18) from and to the control circuit (19', 19") are incorporated into the second housing part (23').

13. Pump according to Claim 8 or 12, **characterized in that** junctions (21) of the exciting arrangement are connected positively to specific conductors of the conductors (18).

14. Pump according to Claim 13, **characterized in that** the positive connections are made by means of resistance or ultrasonic welding or by means of hot staking.

15. Pump according to one of the preceding claims, **characterized in that** the control circuit (19, 19', 19") is embedded into a thermally conducting gel or resin.
